# EUROPÄISCHE PATENTSCHRIFT

(11) **EP 1 011 119 B1**
(45) Veröffentlichungstag und Bekanntmachung des Hinweises auf die Patenterteilung: **05.04.2006**
(21) Anmeldenummer: 99122629.1
(22) Anmeldetag: 13.11.1999
(51) Int. Cl.: H01H 9/04, H02B 1/048

(54) **Elekrisches Schaltgerät zur Anordnung in einer Einbauöffnung**
Electrical switch for mounting through an aperture
Interrupteur électrique pour montage dans une ouverture

(30) Priorität: 19.12.1998 DE 19858982
(43) Veröffentlichungstag der Anmeldung: 21.06.2000
(73) Patentinhaber: Ellenberger & Poensgen GmbH, D-90518 Altdorf (DE)
(72) Erfinder: Ullermann, Wolfgang Dipl.-Ing., D-91126 Schwabach (DE); Ellenberger, Horst Dipl.-Ing., D-90518 Altdorf (DE)
(74) Vertreter: Tergau & Pohl Patentanwälte

(56) Entgegenhaltungen:
- EP-A- 0 687 874
- EP-A- 0 777 245
- DE-A- 1 463 231
- DE-U- 29 616 958
- US-A- 4 673 780
- US-A- 4 937 407

## Beschreibung

Die Erfindung betrifft ein elektrisches Schaltgerät mit den Merkmalen des Oberbegriffs des Anspruches 1.

Ein derartiges Schaltgerät ist aus DE 296 16 958 U1 bekannt. Die dortige Dichtungsanordnung für spritzwassergeschützte Elektro-Installationsgeräte ist zwischen dem Gehäuseunterteil und dem Gehäuseoberteil des Installationsgerätes wirksam. Sie überspannt dabei mit einem haubenartig aus der Teilungsebene zwischen Gehäuseunterteil und Gehäuseoberteil aufgewölbten Zentralbereich die Öffnung des Gehäuseunterteils. Der haubenförmige Zentralbereich enthält eine Durchführöffnung für ein dort als Schaltwippe ausgebildetes Betätigungselement. Diese Durchführungsöffnung umgibt den Durchgangsbereich des Betätigungselementes jedoch lose mit großem Abstand und bildet dadurch keine zuverlässige Abdichtung.

Bei einem aus der US-A-5 722 533 bekannten Schaltgerät ist das Gehäuseober teil gegenüber dem Gehäuseunterteil durch eine im Bereich der Gehäuseaußenwände umlaufende Ringdichtung abgedichtet, die zusätzlich mit einer nach außen abstehenden, umlaufenden Ringrippe eine Abdichtung zwischen dem Auflageflansch des Gehäuseoberteils und dem Umgebungsbereich der Einbauöffnung schafft. Im Gehäuseoberteil sind zwei Drucktasten längsverschiebbar gelagert und dabei im Bereich ihrer das Gehäuseoberteil durchsetzenden Längsführungen gesondert nach Art von Stopfbüchsen abgedichtet. Dadurch wird Wasser- oder Staubeintritt in das Gehäuseinnere vermieden. Diese an verschiedenen Stellen getrennt vorgenommenen Abdichtungsmaßnahmen sind umständlich und behindern die Bewegung der Betätigungselemente.

Der Erfindung liegt die Aufgabe zugrunde, ein elektrisches Schaltgerät der eingangs genannten Art in einfacher Weise derart abzudichten, dass z.B. kein Wasser oder Staub in das lnnere des Schutzschalters selbst, aber auch nicht in das Innere des durch das Paneel abgeschirmten, übergeordneten Gerätes eindringen kann. Diese Aufgabe wird durch Anspruch 1 gelöst. Der besondere Vorteil dieser Lösung wird darin gesehen, dass die unterschiedlichen Abdichtungsaufgaben durch ein einstückiges und in seinem Aufbau einfach gestaltetes Element vorgenommen wird, welches darüber hinaus problemlos montierbar ist. Der für die Betätigung und Auflösung des Schaltgerätes erforderliche Kraftaufwand wird durch die dämpfende Wirkung des Abdichtelementes nur geringfügig vergrößert. Die Lösung hat den weiteren Vorteil, dass wahlweise auch auf das Flächenelement als Abdichtschirm verzichtet werden kann, wenn eine Abdichtung nicht erforderlich ist, ohne dass sich an der Funktionsfähigkeit des Gerätes als solcher etwas ändert. Dazu dient insbesondere die Maßnahme nach Anspruch 2.

Der Erfindungsgegenstand und seine besonderen baulichen Ausgestaltungen werden anhand eines in den Figuren dargestellten Ausführungsbeispiels näher erläutert. Es zeigen.
- Fig. 1: eine perspektivische Explosionsdarstellung der wesentlichen Einzelteile des Schaltgerätes oberhalb der Einbauöffnung eines übergeordneten Gerätes.
- Fig. 2: eine Darstellung analog Fig. 1 aus einem anderen Blickwinkel.
- Fig. 3: eine perspektivische Darstellung des montierten Schaltgerätes in einbaubereiter Position.
- Fig. 4: einen Teil-Vertikalschnitt durch die linke obere Hälfte des Schaltgerätes entsprechend etwa der Schnittlinie IV-IV in Fig. 3.

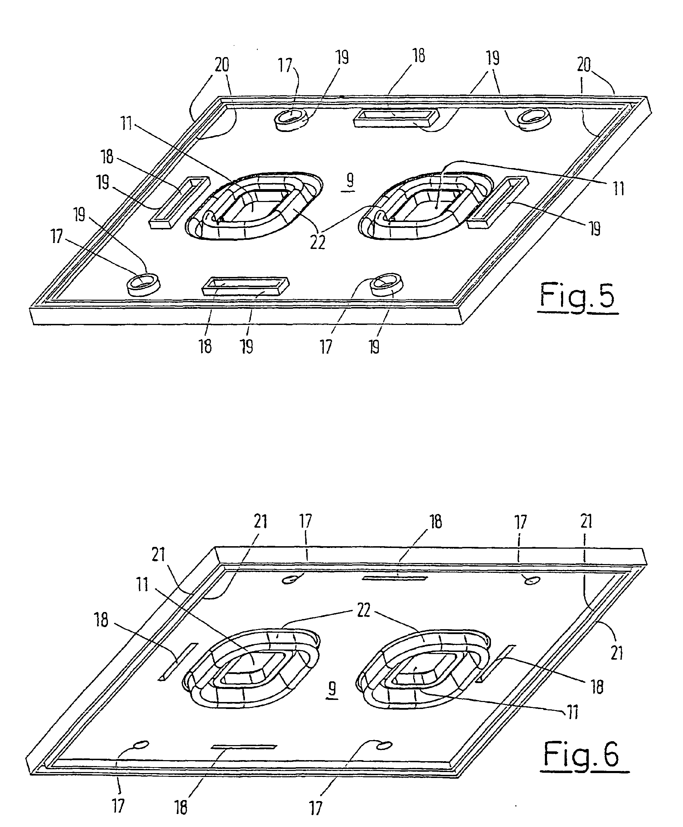

- Fig. 5: eine vergrößerte Darstellung des Flächen- und Dichtelements in per spektivischer Draufsicht analog Fig. 1.
- Fig. 6: eine vergrößerte Darstellung des Flächen- und Dichtelements in perspektivischer Ansicht von unten analog Fig. 2.

Das elektrische Schaltgerät ist zur Anordnung in der Einbauöffnung 1 eines Paneels 2 der Gehäusewand eines übergeordneten Gerätes o.dgl. bestimmt. Es enthält ein zweiteiliges Gehäuse bestehend aus dem Gehäuseunterteil 3 und dem Gehäuseoberteil 4. Die Teilfuge zwischen Gehäuseunterteil 3 und Gehäuseoberteil 4 liegt in einer Ebene. Das Gehäuseoberteil ist mit einem seitlich abstehenden, umlaufenden Auflageflansch 5 versehen. Dadurch überdeckt der Auflageflansch 5 das Paneel 2 im Umgebungsbereich der Einbauöffnung 1, wenn das Schaltgerät in die Einbauöffnung 1 eingebaut und dieser gegenüber verankert ist.

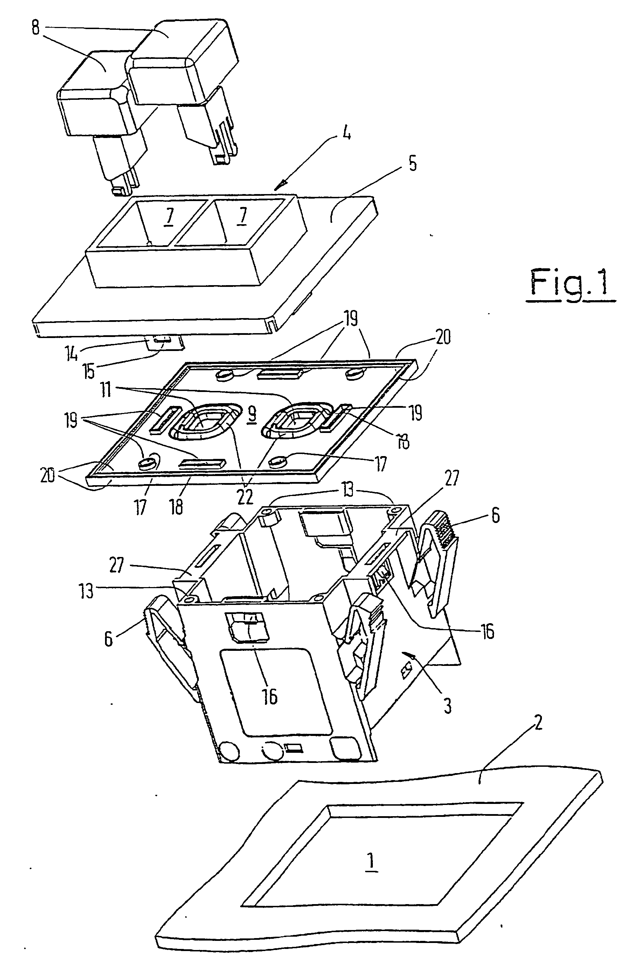

Für die Verankerung des Schaltgerätes in der Einbauöffnung dienen mit den Seitenwänden des Gehäuseunterteils 3 einstückig verbundene und nach außen abstehende Rasthaken 6, die in bekannter Weise beim Durchstecken des Schaltgerätes von außen durch die Einbauöffnung 1 nach innen in eine Anlagestellung an das Gehäuseunterteil 3 elastisch zurückgedrängt werden und nach Erreichung der Sollstellung des Gehäuseunterteils 3 innerhalb der Einbauöffnung 1 elastisch in ihre in den Fig. 1,2 und 4 dargestellte Ausgangsstellung zurückfedem, in der sie sich widerhakenartig hinter die Randkanten der Einbauöffnung 1 legen und damit für eine feste Formschlussverbindung des Gehäuseunterteils 3 an dem Paneel 2 sorgen. Das Gehäuseoberteil 4 liegt in Einbaustellung mit seinem Auflageflansch 5 auf der Oberfläche des Paneels 2 auf. Es ist aber auch ein Verschrauben des Flansches 5 mit dem Paneel 2 vorstellbar.

Das Gehäuseoberteil 4 ist in seinem vom Auflageflansch 5 umgebenen Bereich mit zwei Durchgangsöffnungen 7 für zwei beim Ausführungsbeispiel als Drucktasten ausgebildete Betätigungselemente 8 versehen. Anstelle der beiden Betätigungselemente 8 ist z.B. auch eine Schaltwippe denkbar, die dann aber nur eine einzige Durchgangsöffnung 7 im Gehäuseoberteil 4 benötigt.

Das Gehäuseunterteil 3 dient zur Unterbringung der Schaltmechanik, die vorliegend für den Erfindungsgegenstand keine Rolle spielt und daher nicht näher dargestellt ist. Entscheidend ist das Gehäuse.

Durch die Montage des Schaltgerätes in der Einbauöffnung 1 des Paneels 2 ergibt sich bei der Forderung nach einer wirksamen Abdichtung gegen Störmittel wie Wasser oder Staub das Problem, dass diese Abdichtung an unterschiedlichen Stellen gewährleistet sein muss. Einerseits darf kein solches Störmittel in das Innere des Schutzschalters, also in den Raum zwischen Gehäuseoberteil 4 und Gehäuseunterteil 3 gelangen. Weiterhin muss gewährleistet sein, dass keine solchen Störelemente in das Innere des übergeordneten Gerätes gelangen. Dazu muss eine Abdichtung zwischen Auflageflansch 5 und Paneel 2 gewährleistet sein. Diese Abdichtung wird beim Erfindungsgegenstand durch ein einteiliges, als Abdichtschirm dienendes Flächenelement 9 gemeinsam bewerkstelligt, welches nachstehend kurz auch als Dichtelement bezeichnet ist. Es überspannt die Öffnung des Gehäuseunterteils 3 im Bereich der Teilfuge zum Gehäuseoberteil 4 und reicht in den Auflagebereich des Auflageflansches 5 des Gehäuseoberteils 4 auf dem Paneel 2 hinein. Dabei durchsetzen die Betätigungselemente 8 mit ihren Verbindungsschäften 10 das Dichtelement 9 im Bereich seiner beiden Durchbrüche 11.

An der Unterseite des Gehäuseoberteils 4 sind weiterhin Abstandszapfen 12 angeordnet und zwar an den innenoberflächen der aneinanderstoßenden Seiten des Auflageflansches 5. Sie korrespondieren mit in den Eckbereichen der Seitenwände des Gehäuseunterteils 3 angeordneten Sacklöchern 13. In Montagestellung tauchen die Abstandszapfen 12 in die Sacklöcher 13 des Gehäuseunterteils 3 ein und übemehmen zum einen die Zentrierung des Gehäuseoberteils 4 gegenüber dem Gehäuseunterteil 3. Andererseits dienen die Abstandszapfen 12 dazu, durch ihr Auftreffen auf die Stirnwände der Sacklöcher das Spaltmaß, also die Größe der Teilfuge zwischen Gehäuseunterteil 3 und Gehäuseoberteil 4 in Zusammenbaustellung festzulegen. Dadurch ist für einen gleichbleibenden Abstand des Gehäuseoberteils 4 vom Gehäuseunterteil 3 gesorgt, gleichgültig ob die Teilungsebene zwischen diesen beiden Gehäuseteilen einen Abdeckschirm in Form eines Flächenelements 9 enthält oder ob darauf verzichtet wird, wenn beispielsweise keine besonderen Abdichtungsanforderungen gestellt sind. Diese Alternative hat eine besondere Bedeutung bei der nachstehend beschriebenen Schnappfixierung des Gehäuseoberteils 4 auf dem Gehäuseunterteil 3.

Die Fixierung des Gehäuseoberteils 4 am Gehäuseunterteil 3 wird durch aus dem Gehäuseoberteil 4 nach unten in Richtung auf das Gehäuseunterteil 3 vorstehende, nach Art von Sieckzungen wirksame Rastarme 14 bewerkstelligt, die von jeweils einem Rastauge 15 durchsetzt sind. Die Erstreckungsebenen der Rastarme 14 verlaufen parallel zu den Seitenwänden des Gehäuseunterteils 3 an deren Außenseite. In Verbindungsstellung, in welcher die Abstandszapfen 12 für eine konstante Abstandsposition des Gehäuseoberteils 4 vom Gehäuseunterteil 3 sorgen, korrespondieren ihre Rastaugen 15 mit an die Außenwände des Gehäuseunterteils 3 angeformten Rastnasen 16, die in Zusammenbaustellung in eine Hintergriffstellung in die Rastaugen 15 einrasten.

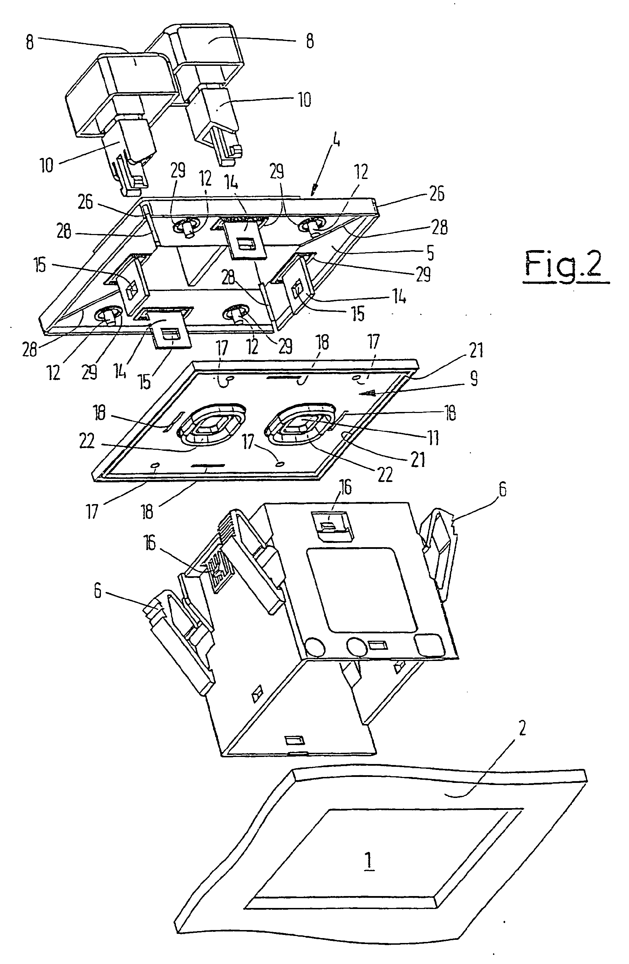

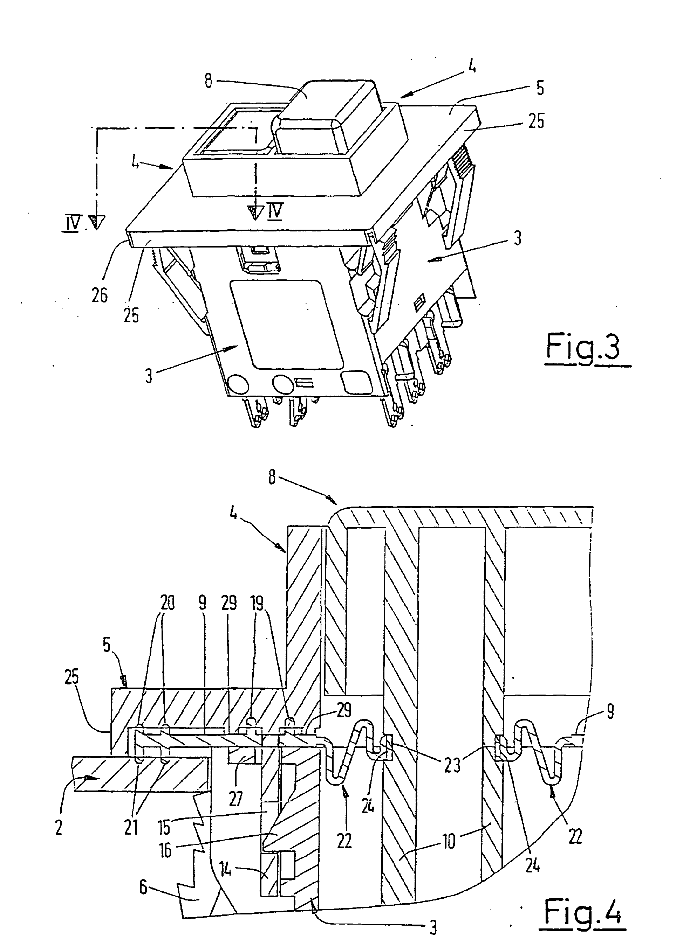

Sowohl für die Abstandszapfen 12 als auch für die Rastarme 14 weist das Dichtelement 9 weitere Durchbrüche auf. Es sind das die Durchgangslöcher 17 für die Abstandszapfen 12 und die Durchgangsschlitze 18 für die Rastarme 14. Die für die Abstandshalter 12 und die Fixierelemente in Form der Rastarme 14 bestimmten Durchgangsöffnungen 17,18 des Flächen- oder Dichtelements 9 sind auf dessen dem Gehäuseoberteil 4 zugewandter Oberfläche (Fig. 1) von ringsum in sich geschlossenen, aus der Flächenebene in Richtung auf das Gehäuseoberteil 4 vorstehenden Dichtlippen 19 umgeben. Die an der Innenseite des Gehäuseober teils 4 bzw. an dessen Auflageflansch 5 vorgesehenen Anlagebereiche der Dichtlippen 19 sind von aus der Stimwand des Gehäuseoberteils 4 vorstehenden, mit dem Gehäuseoberteil 4 einstückigen Gegenrippen 29 (Fig. 2,4) umgeben, welche die Dichtlippen 19 auf ihrer Außenseite flankieren. Dadurch wird die Dichtwirkung in diesen Bereichen noch weiter verbessert.

Des Weiteren enthält das Flächen- oder Dichtelement 9 in seinem Randbereich aus seiner Flächenebene in Richtung auf das Gehäuseoberteil 4 vorstehende, ringsum in sich geschlossene, kompressible Dichtlippen 20 zur Anlage an der Gegenfläche bzw. den Gegenflächen des Gehäuseoberteils 4 bzw. des Auflageflansches 5.

Desgleichen ist das Flächenelement 9 in seinem Randbereich mit aus der Flächenebene in Richtung auf das Gehäuseunterteil 3 vorstehenden, ringsum in sich geschlossenen, kompressiblen Dichtlippen 21 zur Anlage an der Oberfläche des Paneels 2 bzw. an den Randbereichen zur Einbauöffnung 1 versehen. Sowohl die Umgebungs-Dichtlippen 20 auf der Oberseite als auch die Umgebungs-Dichtlippen 21 auf der Unterseite des Dichtelements 9 sind als zueinander parallele Doppeldichtlippen ausgebildet.

Die von den Dichtlippen 19-21 kontaktierten Bereiche der Gehäuseteile 3,4 sind so ausgebildet bzw. mit solchen Auflageflächen versehen, dass sie in Zusammenbaustellung eine Dichtlippenquetschung bewirken. Dies ist in Fig. 4 bei den dort dargestellten Dichtlippen 19-21 dadurch zum Ausdruck gebracht, dass die Dichtlippen 19-21 entgegen ihrer tatsächlichen Wirksamkeit zeichnerisch so wiedergegeben sind, dass sie in die von ihnen quetschkontaktierten Oberflächen eindringen. Das ist hier eine Folge allein des zur Bildinformation der Anmeldungsunterlagen verwendeten Zeichensystems (CAD).

Die Abdichtung des Flächen- oder Dichtelements 9 gegenüber den Betätigungselementen 8 bzw. gegenüber deren das Flächen- oder Dichtelement 9 durchsetzende Verbindungsschäfte 10 ist als jeweils einen Verbindungsschaft 10 dichtend umfassender Faltenbalg 22 ausgebildet. Zur Optimierung der Dichtwirkung ist der Schaft 10 des Betätigungselements 8 im Durchgangsbereich durch das Dichtelement 9 von einer Ringnut 23 umgeben, in der der Faltenbalg 22 mit seinen Durchgangsrändern 24 in Richtung auf den Nutgrund elastisch vorgespannt einliegt. Dadurch kommt im Grenzbereich zwischen Faltenbalg 22 und Verbindungsschaft 10 bei einer Betätigung des Betätigungselements 8 keine Relativbewegung zwischen den beiderseitigen Grenzflächen zustande, die zu einem unerwünschten Verschleiss führen und dadurch die angestrebte Dichtwirkung in Frage stellen könnte. Die besondere Formgebung der Faltenbälge 22 vermeidet weitgehend eine unerwünschte zusätzliche Kraftwirkung auf die Betätigungselemente 8.

Der Flansch 5 ist auf seiner Innenseite mit Ablaufkanälen 28 zum Ablauf von in den Innenraum des Schaltgerätes vom Gehäuseunterteil eingedrungenem Wasser versehen. Die Ablaufkanäle 28 verlaufen rinnenförmig von den Ecken der Durchgangsöffnungen 7 in Richtung auf die Außenecken des Auflageflansches 5. Dort sind die Seitenwände 25 des Flansches 5 des Gehäuseoberteils 4 mit Durchlassöffnungen 26 für in den Innenraum des Schaltgerätes eingedrungenes, jedoch vom Gehäuseunterteil 3 abgeschirmtes Wasser versehen. Die Durchlassöffnungen 26 sind in den Ecken des Flansches 5 positioniert.

### Bezugszeichenliste

- 1: Einbauöffnung
- 2: Paneel
- 3: Gehäuseunterteil
- 4: Gehäuseoberteil
- 5: Auflageflansch
- 6: Rasthaken
- 7: Durchgangsöffnung
- 8: Betätigungselement
- 9: Flächen- und Dichtelement
- 10: Verbindungsschaft
- 11: Durchbruch
- 12: Abstandszapfen
- 13: Sackloch
- 14: Rastarm
- 15: Rastauge
- 16: Rastnase
- 17: Durchgangsloch
- 18: Durchgangsschlitz
- 19: Dichtlippe
- 20: Dichtlippe
- 21: Dichtlippe
- 22: Faltenbalg
- 23: Ringnut
- 24: Durchgangsrand
- 25: Seitenwand
- 26: Durchlassöffnung
- 27: Ringflansch
- 28: Ablaufkanal
- 29: Gegenrippe

## Patentansprüche

1. Elektrisches Schaltgerät zur Anordnung in einer Einbauöffnung (1) eines Paneels (2), mit einem zweiteiligen Gehäuse enthaltend ein Gehäuseunterteil (3) und ein diesem gegenüber abgedichtetes Gehäuseoberteil (4), das mit einem seitlich abstehenden Auflageflansch (5) versehen ist, mit mindestens einem das Gehäuseoberteil (4) durchsetzenden Betätigungselement (8), und mit einem die Öffnung des Gehäuseunterteils (3) im Bereich der Teilfuge zum Gehäuseoberteil (4) abdichtend überspannenden Flächenelement (9) aus einem gummielastischen Werkstoff,
**gekennzeichnet durch**
- dass das Flächenelement (9) einteilig sowie zum abdichtenden Einliegen in dem Auflagebereich zwischen dem Auflageflansch (5) des Gehäuseoberteils (4) und dem Paneel (2) ausgeführt ist, und
- dass das Flächenelement (9) Durchgangsöffnungen (11, 17, 18) für vom Gehäuseoberteil (4) in das Gehäuseunterteil (3) hineinreichende Betätigungs- und Fixierelemente (8 bzw. 14) aufweist, wobei die Durchgangsöffnungen (11, 17, 18) die Betätigungs- bzw. Fixierelemente (8, 14) derart abdichten, dass zumindest im Bereich der Grenzflächen zwischen den Betätigungselementen (8) und den diesen zugeordneten Durchgangsöffnungen (11) eine Relativbewegung vermieden ist.

2. Schaltgerät nach Anspruch 1,
**gekennzeichnet durch**
mindestens einen das Flächenelement (9) abgedichtet durchsetzenden und zur Gewährleistung einer vorgegebenen Teilfugenbreite dienenden Abstandshalter (12) zwischen Gehäuseunterteil (3) und Gehäuseoberteil (4).

3. Schaltgerät nach Anspruch 1,
**dadurch gekennzeichnet,**
**dass** das Flächenelement (9) sich in einer Ebene zwischen Gehäuseunterteil (3) und Gehäuseoberteil (4) erstreckt.

4. Schaltgerät nach einem oder mehreren der vorhergehenden Ansprüche,
**dadurch gekennzeichnet,**
**dass** die für Abstandshalter (12) und/oder Fixierelemente (14) bestimmten Durchgangsöffnungen (17,18) des Flächenelements (9) auf dessen dem Gehäuseoberteil (4) zugewandter Oberfläche von ringsum in sich geschlossenen, aus der Flächenebene in Richtung auf das Gehäuseoberteil (4) vorstehenden Dichtlippen (19) umgeben sind.

5. Schaltgerät nach Anspruch 4,
**dadurch gekennzeichnet,**
**dass** die Anlagebereiche der Dichtlippen (19) am Gehäuseoberteil (4) bzw. an dessen Auflageflansch (5) von aus der Stimwand des Gehäuseoberteils (4) vorstehenden, mit dem Gehäuseoberteil (4) einstückigen Gegenrippen (29) umgeben sind, welche die Dichtlippen (19) auf ihrer Außenseite flankieren.

6. Schaltgerät nach einem oder mehreren der vorhergehenden Ansprüche,
**dadurch gekennzeichnet,**
**dass** das Flächenelement (9) in seinem Außenrandbereich mit aus der Flächenebene in Richtung auf das Gehäuseoberteil (4) vorstehenden, ringsum in sich geschlossenen, kompressiblen Dichtlippen (20) zur Anlage an Gegenflächen des Gehäuseoberteils (4) oder des Flansches (5) versehen ist.

7. Schaltgerät nach einem oder mehreren der vorhergehenden Ansprüche,
**dadurch gekennzeichnet,**
**dass** das Flächenelement (9) mit in seinem Randbereich aus der Flächenebene in Richtung auf das Gehäuseunterteil (3) vorstehenden, ringsum in sich geschlossenen, kompressiblen Dichtlippen (21) zur Anlage an der Gegenfläche des Gehäuseunterteils (3) versehen ist.

8. Schaltgerät nach Anspruch 6 oder 7,
**gekennzeichnet durch**
umlaufende, zueinander parallele Doppeldichtlippen (20,21).

9. Schaltgerät nach einem der Ansprüche 6 bis 8,
**gekennzeichnet durch**
an den von den Dichtlippen (19-21) kontaktierten Bereichen der Gehäuseteile (3,4) angeordnete Auflageflächen zur in Zusammenbaustellung erfolgenden Dichtlippenquetschung.

10. Schaltgerät nach einem oder mehreren der vorhergehenden Ansprüche,
**dadurch gekennzeichnet,**
**dass** eine im Flächenelement (9) angeordnete Durchgangsöffnung (7) für ein Betätigungselement (8) als das Betätigungselement (8) dichtend umfassender Faltenbalg (22) ausgebildet ist.

11. Schaltgerät nach Anspruch 10,
**gekennzeichnet durch**
eine den Schaft (10) eines Betätigungselements (8) ringförmig umgebende Ringnut (23), in der der Faltenbalg (22) mit seinen Durchgangsrändem (24) in Richtung auf den Nutgrund elastisch vorgespannt einliegt

12. Schaltgerät nach einem oder mehreren der vorhergehenden Ansprüche,
**dadurch gekennzeichnet,**
**dass** der Auflageflansch (5) des Gehäuseoberteils (4) das Flächenelement (9) mit einer in Richtung auf das Gehäuseunterteil (3) vorstehenden Seitenwand (25) einfaßt.

13. Schaltgerät nach einem oder mehreren der vorhergehenden Ansprüche,
**dadurch gekennzeichnet,**
**dass** der Auflageflansch (5) auf seiner Innenseite mit Ablauflcanälen (28) und die Seitenwände (25) des Auflageflansches (5) des Gehäuseoberteils (4) mit Durchlassöffnungen (26) zum Ablauf von in den Innenraum des Schaltgerätes eingedrungenem, jedoch vom Gehäuseunterteil (3) abgeschirmtem Wasser versehen sind.

14. Schaltgerät nach Anspruch 13,
**dadurch gekennzeichnet,**
**dass** die Durchlassöffnungen (26) an den Enden der Ablaufkanäle (28) in den Ecken des Auflageflansches (5) positioniert sind.

## Claims

1. Electrical switching device to be arranged in an installation opening (1) in a panel (2) having a two-part housing containing a housing lower part (3) and a housing upper part (4), which is sealed off with respect to said housing lower part (3) and is provided with a laterally protruding bearing flange (5), having at least one actuating element (8) which passes through the housing upper part (4), and having a surface element (9) which is made of a rubber-elastic material and bridges the opening in the housing lower part (3) in a sealing manner in the region of the joint between said housing lower part (3) and the housing upper part (4), **characterized**
- **in that** the surface element (9) is of integral design and is designed to lie in a sealing manner in the bearing region between the bearing flange (5) of the housing upper part (4) and the panel (2), and
- **in that** the surface element (9) has through-openings (11, 17, 18) for actuating and fixing elements (8 and 14, respectively) which reach into the housing lower part (3) from the housing upper part (4), the through-openings (11, 17, 18) sealing off the actuating and fixing elements (8, 14) such that a relative movement is prevented at least in the region of the interfaces between the actuating elements (8) and the through-openings (11) associated with said actuating elements (8).

2. Switching device according to Claim 1, **characterized by** at least one spacer (12) between the housing lower part (3) and the housing upper part (4), which spacer (12) passes through the surface element (9) in a sealing manner and serves the purpose of ensuring a predetermined joint width.

3. Switching device according to Claim 1, **characterized in that** the surface element (9) extends on a plane between the housing lower part (3) and the housing upper part (4).

4. Switching device according to one or more of the preceding claims, **characterized in that** the through-openings (17, 18) in the surface element (9) which are intended for spacers (12) and/or fixing elements (14) are surrounded on the upper surface, which faces the housing upper part (4), of said surface element (9) by sealing lips (19) which are closed all around and protrude from the surface plane in the direction of the housing upper part (4).

5. Switching device according to Claim 4, **characterized in that** the resting regions of the sealing lips (19) on the housing upper part (4) or on the bearing flange (5) of said housing upper part (4) are surrounded by opposing ribs (29) which protrude from the end wall of the housing upper part (4), are integral with the housing upper part (4) and flank the sealing lips (19) on their outer side.

6. Switching device according to one or more of the preceding claims, **characterized in that** the surface element (9) is provided in its outer edge region with compressible sealing lips (20), which protrude from the surface plane in the direction of the housing upper part (4) and are closed all around, for the purpose of resting on opposing surfaces of the housing upper part (4) or of the flange (5) .

7. Switching device according to one or more of the preceding claims, **characterized in that** the surface element (9) is provided with compressible sealing lips (21), which protrude in the edge region of said surface element (9) from the surface plane in the direction of the housing lower part (3) and are closed all around, for the purpose of resting on the opposing surface of the housing lower part (3).

8. Switching device according to Claim 6 or 7, **characterized by** peripheral double sealing lips (20, 21) which are parallel to one another.

9. Switching device according to one of Claims 6 to 8, **characterized by** bearing surfaces which are arranged at those regions of the housing parts (3, 4) with which contact is made by the sealing lips (19-21) for the purpose of pinch-sealing of the sealing lips, which takes place in the assembled position.

10. Switching device according to one or more of the preceding claims, **characterized in that** a through-opening (7) which is arranged in the surface element (9) for an actuating element (8) is in the form of folding bellows (22) which surround the actuating element (8) in a sealing manner.

11. Switching device according to Claim 10, **characterized by** an annular groove (23), which annularly surrounds the shaft (10) of an actuating element (8) and in which the folding bellows (22) lies elastically prestressed with its through-edges (24) in the direction of the base of the groove.

12. Switching device according to one or more of the preceding claims, **characterized in that** the bearing flange (5) of the housing upper part (4) encloses the surface element (9) with a side wall (25) which protrudes in the direction of the housing lower part (3).

13. Switching device according to one or more of the preceding claims, **characterized in that** the bearing flange (5) is provided on its inner side with drain channels (28), and the side walls (25) of the bearing flange (5) of the housing upper part (4) are provided with passage openings (26) for the purpose of draining water which has penetrated into the interior of the switching device but is screened from the housing lower part (3) .

14. Switching device according to Claim 13, **characterized in that** the passage openings (26) are positioned at the ends of the drain channels (28) in the corners of the bearing flange (5).

## Revendications

1. Appareil de commutation électrique destiné à être monté dans une ouverture de montage (1) d'un panneau (2), comportant un boîtier formé de deux parties et contenant une partie inférieure de boîtier (3) et une partie supérieure de boîtier (4) fermée de façon étanche par rapport à la partie inférieure de boîtier et qui comporte une bride d'application (5) qui fait saillie latéralement, et comportant au moins un élément d'actionnement (8), qui traverse la partie supérieure de boîtier (4) et un élément (9) qui est réalisé en une matière présentant l'élasticité du caoutchouc et recouvre de manière étanche l'ouverture de la partie inférieure de boîtier (3) dans la zone du joint de séparation avec la partie supérieure de boîtier (4),
**caractérisé en ce**
- **que** l'élément de surface plat (9) est réalisé d'un seul tenant et est destiné à être inséré d'une manière étanche dans la zone d'application entre la bride d'application (5) de la partie supérieure de boîtier (4) et le panneau (2), et
- **que** l'élément de surface plat (9) comporte des ouvertures de passage (11,17,18) pour des éléments d'actionnement et de fixation (8,14), qui pénètrent depuis la partie supérieure de boîtier (4) dans la partie inférieure de boîtier (3), les ouvertures de passage (11,17,18) renfermant de façon étanche les éléments d'actionnement et de fixation (8,14) de telle sorte qu'un déplacement relatif est évité au moins dans la zone des surfaces limites entre les éléments d'actionnement (8) et les ouvertures de passage (11) associées à ces éléments.

2. Appareil de commutation selon la revendication 1, **caractérisé par** au moins une entretoise (12), qui traverse d'une manière étanchéifiée l'élément de surface plat (9), sert à garantir une largeur prédéterminée du joint de séparation et est disposée entre la partie inférieure de boîtier (3) et la partie supérieure de boîtier (4).

3. Appareil de commutation selon la revendication 1, **caractérisé en ce que** l'élément de surface plat (9) s'étend dans un plan situé entre la partie inférieure de boîtier (3) et la partie supérieure de boîtier (4).

4. Appareil de commutation selon une ou plusieurs des revendications précédentes, **caractérisé en ce que** les ouvertures de passage (17,18) de l'élément de surface plat (9), qui sont prévues pour des entretoises (12) et /ou des éléments de fixation (14), sont entourées, sur la surface de l'élément de surface plat tournée vers la partie supérieure de boîtier (4), par des lèvres d'étanchéité (19), qui sont refermées annulairement sur elles-mêmes et font saillie à partir du plan de surface en direction de la partie supérieure de boîtier (4).

5. Appareil de commutation selon la revendication 4, **caractérisé en ce que** les zones d'application des lèvres d'étanchéité (19) sur la partie supérieure de boîtier (4) ou sur la bride d'application (5) de cette dernière sont entourées par des nervures opposées (29), qui font saillie sur la paroi frontale de la partie supérieure de boîtier (4), sont réalisées d'un seul tenant avec la partie supérieure de boîtier (4) et flanquent les lèvres d'étanchéité (19) sur leur face extérieure.

6. Appareil de commutation selon une ou plusieurs des revendications précédentes, **caractérisé en ce que** l'élément de surface plat (9) est équipé, dans sa partie marginale extérieure, de lèvres d'étanchéité compressibles (20), qui font saillie à partir du plan de surface en direction de la partie supérieure de boîtier (4), d'une manière fermée de façon annulaire sur soi, pour l'application sur des surfaces antagonistes de la partie supérieure de boîtier (4) ou de la bride (5).

7. Appareil de commutation selon une ou plusieurs des revendications précédentes, **caractérisé en ce que** l'élément de surface plat (9) est équipé, dans sa partie marginale de lèvres d'étanchéité compressibles (21) qui font saillie, dans sa partie marginale, à partir du plan de surface en direction de la partie inférieure du boîtier (3) et sont fermées annulairement sur elles-mêmes, pour s'appliquer contre la surface antagoniste de la partie inférieure de boîtier (3).

8. Appareil de commutation selon la revendication 6 ou 7, **caractérisé par** des lèvres d'étanchéité périphériques doubles (20,21) parallèles entre elles.

9. Appareil de commutation selon l'une des revendications 6 à 8, **caractérisé par** des surfaces d'application disposées sur les zones, qui touchent les lèvres d'étanchéité (19-21), des parties de boîtier (3,4) pour le pincement des lèvres d'étanchéité qui est réalisé dans la position assemblée de montage.

10. Appareil de commutation selon une ou plusieurs des revendications précédentes, **caractérisé en ce qu'**une ouverture de passage (7) disposée dans l'élément de surface plat (9) est réalisée pour un élément d'actionnement (8) en tant que soufflet (22) enveloppant de façon étanche l'élément d'actionnement (8).

11. Appareil de commutation selon la revendication 10, **caractérisé par** une rainure annulaire (23), qui entoure annulairement la tige (10) d'un élément d'actionnement (8) et dans laquelle le soufflet (22) est inséré, par ses bords de passage (24) en étant précontraint élastiquement en direction du fond de la rainure.

12. Appareil de commutation selon une ou plusieurs des revendications précédentes, **caractérisé en ce que** la bride d'application (5) de la partie supérieure de boîtier (4) enserre l'élément de surface plat (9) par une paroi latérale (25) qui fait saillie en direction de la partie inférieure de boîtier (3).

13. Appareil de commutation selon une ou plusieurs des revendications précédentes, **caractérisé en ce que** la bride d'application (5) est équipée, sur sa face intérieure, de canaux d'évacuation (28), et des parois latérales (25) de la bride d'application (5) de la partie supérieure de boîtier (4) sont équipées d'ouvertures de passage (26) pour l'évacuation de l'eau qui a pénétré dans l'espace intérieur de l'appareil de commutation, mais est isolée par la partie inférieure de boîtier (3).

14. Appareil de commutation selon la revendication 13, **caractérisé en ce que** les ouvertures de passage (26) sont positionnées sur les extrémités des canaux d'évacuation (26) au niveau des coins de la bride d'application (5).
